# FASCICULE DE BREVET EUROPEEN

(11) **EP 0 704 782 B1**
(45) Date de publication et mention de la délivrance du brevet: **03.11.1999**
(21) Numéro de dépôt: 95402133.3
(22) Date de dépôt: 22.09.1995
(51) Int. Cl.: G05D 1/00

(54) **Procédé de vidéo-commande à distance d'engins en particulier de véhicules, et dispositif de mise en oeuvre**
Videokontrollverfahren zur Fernsteuerung von Maschinen insbesondere von Fahrzeugen und Vorrichtung zur Durchführung des Verfahrens
Remote video control method for machines especially for vehicles and apparatus for carrying out the method

(30) Priorité: 27.09.1994 FR 9411497
(43) Date de publication de la demande: 03.04.1996
(73) Titulaire: Société M5, 41300 Salbris (FR)
(72) Inventeur: Bailly, Michel, F-92402 Courbevoie Cedex (FR)
(74) Mandataire: Chaverneff, Vladimir

(56) Documents cités:
- EP-A- 0 606 173
- WO-A-90/02370
- DE-C- 3 928 244
- US-A- 3 564 134
- US-A- 4 405 943
- US-A- 4 855 822
- US-A- 5 170 352
- NTC'91 NATIONAL TELESYSTEMS CONFERENCE PROCEEDINGS, IEEE ATLANTA US, VOLUME 1, MARCH 26 AND 27 1991, pages 315-320, S. MYERS 'Surrogate teleoperated vehicle (STV)'
- IEEE, SOUTHEASTCON '90 PROCEEDINGS VOLUME 2 OF 3 , APRIL 1-4, 1990, NEW ORLEANS US, pages 618-620, G. CORBETT ET AL. 'A Human Factors Tested For Ground-Vehicle Telerobotics Research'

## Description

La présente invention se rapporte à un procédé de vidéo-commande à distance d'engins, en particulier de véhicules, ainsi qu'à un dispositif de mise en oeuvre de ce procédé.

Pour télécommander des véhicules tels qu'un engin de travaux publics, on a, en particulier, besoin de voir l'environnement de ce véhicule, au moins aussi complètement que le verrait son conducteur s'il était au poste de commande de ce véhicule.

Une première solution connue à ce problème de visualisation consiste à munir un véhicule télécommandé de plusieurs caméras vidéo orientées de façons différentes et/ou ayant des focales différentes, et à transmettre séquentiellement leurs signaux vidéo sur un canal HF. Une telle solution, si elle est satisfaisante pour un véhicule immobilisé ou roulant à très faible vitesse, ne peut être envisagée pour un véhicule roulant rapidement et/ou comportant des engins (pelles mécaniques, bras de manipulation...) devant être commandés avec un très faible temps de réaction.

Une variante de cette première solution consiste à grouper (par exemple par groupes de 4) les signaux vidéo de plusieurs caméras pour constituer une image unique divisée en plusieurs (quatre pour l'exemple précité) zones dont chacune correspond à l'image fournie par l'une des caméras, cette image unique étant transmise sur un seul canal de transmission et visualisée avec ces mêmes zones à la réception. Une telle solution non seulement diminue la taille des différentes images partielles mais est difficile à interpréter du fait que la disposition des images partielles (occupant chacune un quadrant de l'écran de visualisation) ne correspond pas à la disposition des caméras.

On connaît d'après les documents US-A-3 564 134, DE-C1-3 928 244 et US-A-5 170 352 des procédés de vidéo-commande à distance d'engins, mais aucun d'eux ne permet de transmettre sur un canal de transmission vidéo classique les signaux vidéo d'un grand nombre de caméras.

La présente invention a pour objet un procédé de télécommande d'engins, en particulier de véhicules, permettant de visualiser en temps réel l'environnement de ces engins, de façon la plus réaliste possible, en n'utilisant qu'un seul canal de transmission vidéo entre un engin et son poste de commande distant.

La présente invention a également pour objet un dispositif de mise en oeuvre de ce procédé, dispositif qui soit peu onéreux, facile à implanter dans pratiquement tout type d'engin, et robuste.

Le procédé conforme à l'invention, utilisant plusieurs caméras disposées dans l'engin à télécommander orientées de façon différentes et/ou ayant des focales différentes, et un poste de commande distant, la liaison entre ce poste de commande et l'engin se faisant par fil ou par ondes radio, consiste à mixer, dans l'engin même, les signaux vidéo issus des différentes caméras, à la façon du mixage vidéo pratiqué dans les studios, à transmettre au poste de commande le signal résultant sur un canal de transmission unique, à visualiser au poste de commande sur un ou plusieurs dispositifs d'affichage les images ainsi mixées et à transmettre depuis le poste de commande, sur le même canal ou sur un autre canal, les différents ordres de télécommande de l'engin et des différentes caméras.

Le dispositif conforme à l'invention comporte, dans un centre de télécommande, un émetteur de données de télécommande et un récepteur vidéo et audio et au moins un moniteur vidéo, et dans l'engin à télécommander un émetteur vidéo et audio et un récepteur de télécommande, plusieurs caméras vidéo et il est caractérisé en ce que l'engin comporte un dispositif de mixage vidéo. De façon avantageuses, lorsque l'engin est soumis à des vibrations, les caméras, et le cas échéant les équipements électroniques fragiles qu'il comporte, sont équipés de dispositifs atténuant les vibrations qui pourraient leur être transmises.

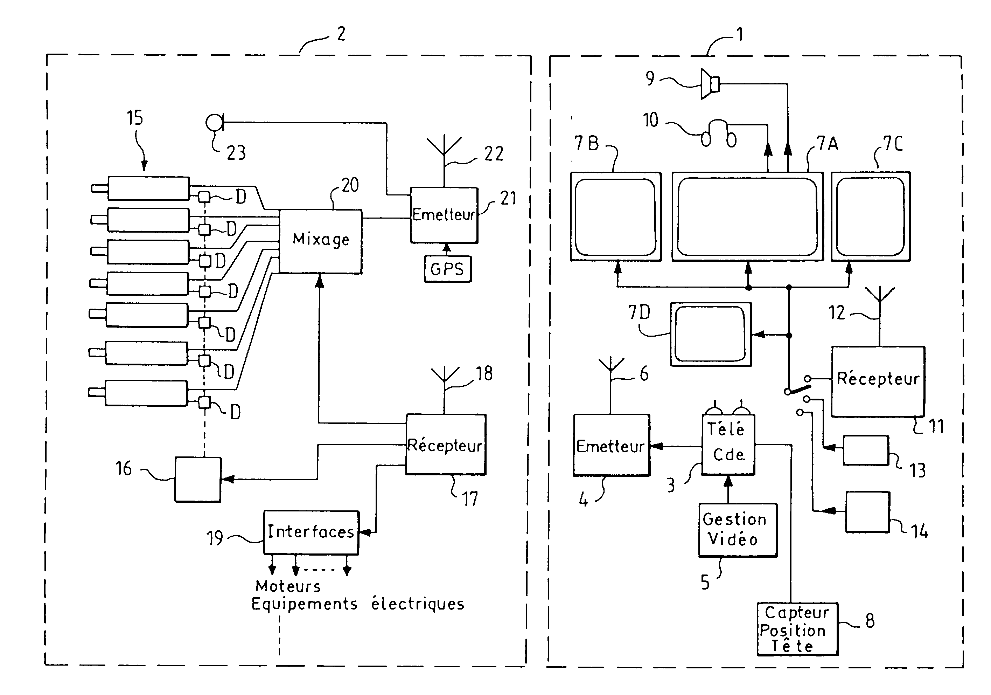

La présente invention sera mieux comprise à la lecture de la description détaillée d'un mode de réalisation, pris à titre d'exemple non limitatif et illustré par le dessin annexé dont la figure unique est un bloc diagramme d'un mode de réalisation préféré de l'invention.

Le dispositif de l'invention, schématiquement représenté sur la figure unique du dessin, comporte essentiellement un poste de commande 1, généralement fixe (mais qui peut aussi être mobile), et un poste télécommandé 2 disposé sur un engin mobile et/ou soumis à des vibrations. Cet engin peut par exemple être un engin de travaux publics (pelleteuse mécanique, excavatrice,...), un télé-manipulateur, un véhicule militaire ou spatial...

Le poste de commande 1, dans lequel se trouve l'opérateur télécommandant l'engin portant le poste 2, comporte essentiellement un dispositif 3 de télécommande relié à un émetteur 4 et à un boîtier de gestion vidéo 5. L'émetteur 4 est par exemple un émetteur radio et est dans ce cas relié à une antenne d'émission 6 (dans le cas où la liaison entre le poste de commande et l'engin se fait par ondes hertziennes), mais peut aussi être un adaptateur de câble si la liaison se fait par fil. Le boîtier 5 comporte essentiellement les commandes déportées de l'ensemble de mixage (décrit ci-dessous) du poste 2. Ces commandes déportées sont par exemple la sélection des vues des différentes caméras du poste 2, l'incrustation de vues de détail dans des vues d'ensemble,...

Le poste de commande 1 comporte également plusieurs moniteurs de visualisation 7A, 7B,.... Chacun de ces moniteurs est chargé d'afficher une partie, plus ou moins importante, de la scène se passant autour de l'engin, dans toutes les directions nécessaires, et éventuellement dans sa cabine. Selon l'exemple représenté sur le dessin, le poste 1 comporte un moniteur principal 7A capable d'afficher simultanément et en temps réel les images captées par les caméras frontales (par exemple trois caméras) de l'engin. Ces images sont mixées, de façon connue en soi, dans le poste 2, pour pouvoir être affichées sur un seul écran. Le mixage peut par exemple consister à juxtaposer les images de caméras à champs adjacents pour obtenir une image résultant à grand champ horizontal, ou à incruster dans une image principale à grand champ une ou plusieurs images de détails (obtenues par des caméras à grande focale) ou de zones d'intérêt. Ces zones d'intérêt peuvent par exemple être déterminées par des capteurs 8 de position de la tête de l'opérateur.

En plus du moniteur principal 7A, le poste 1 comporte un ou plusieurs autres moniteurs, tels que le moniteur 7B chargé de visualiser le champ arrière de l'engin, et les moniteurs 7C, 7D chargés de visualiser les champs latéraux de l'engin. Bien entendu, l'engin est équipé de caméras correspondantes captant ces différents champs. On restitue ainsi, de la façon la plus réaliste possible, l'environnement visuel de l'engin, tel que le verrait un opérateur à bord de l'engin (ou même mieux, dans le cas où l'on fait appel à des caméras à très grand champ ou à grande focale). De façon avantageuse, le poste 1 comporte un haut-parleur 9 et/ou un casque audio 10 (reliés par exemple au moniteur 7A) reproduisant l'ambiance sonore à bord de l'engin et/ou autour de lui.

Les différents moniteurs du poste 1 sont reliés à un récepteur 11 vidéo et audio muni d'une antenne 12. Dans le cas d'une liaison filaire entre les postes 1 et 2, le récepteur 11 est remplacé par un terminal de câble. Les moniteurs du poste 1 peuvent également être reliés à d'autres sources d'informations telles qu'un récepteur GPS 13, une caméra 14 d'ambiance (filmant par exemple l'environnement du poste de commande 1).

Le poste 2 comporte plusieurs caméras, référencées 15 dans leur ensemble. Ces caméras sont orientées dans différentes directions (site et/ou gisement) afin de capter tout l'environnement désiré de l'engin comportant le poste 2. Il est également possible d'orienter l'une ou plusieurs de ces caméras vers l'intérieur de l'engin (surveillance d'instruments de bord, de machines,...). Chacune de ces caméras, ou une partie d'entre elles, comporte un dispositif D de commande de distance focale (zoom), éventuellement de commande de netteté, et de commande d'orientation (site et/ou gisement). Ces différents dispositifs de commande sont reliés à un dispositif central de commande 16, lui-même relié à un récepteur de télécommande 17, muni d'une antenne de réception 18. Ce récepteur 17 est également relié à un dispositif 19 d'interface comportant des servo-valves et, le cas échéant d'autres dispositifs de commande électro-hydrauliques, électromécaniques ou électriques permettant la commande des différents organes ou sous-ensembles dudit engin (commande de moteurs, de pelles hydrauliques, de la direction,... des phares, du Klaxon.).

Les sorties vidéo des caméras 15 sont reliées à un ensemble de mixage en temps réel 20, dont l'entrée de commande est reliée au récepteur 17. Cet ensemble 20 est du type des "pupitres de mixage" couramment utilisés dans les studios de télévision ou dans les simulateurs pour réaliser, en particulier, des incrustations d'images en provenance de différentes sources (contrairement au multiplexage, qui consiste à transmettre séquentiellement sur un canal unique les signaux provenant de plusieurs sources).

L'ensemble 20 réalise également la numérisation des signaux vidéo des caméras 15 et la synchronisation image par image de leurs signaux vidéo.

L'ensemble 20 peut ainsi, par exemple, sélectionner une image de fond à grand champ optique (en site et/ou en gisement), généralement à faible ou moyenne définition, dans laquelle il incruste une ou plusieurs images à faible champ optique et meilleure définition (zones d'intérêt), dont la position par rapport à l'image de fond est avantageusement variable, par exemple en fonction de l'orientation de l'engin ou de la tête de l'opérateur du poste 1, lorsque, comme précisé ci-dessus, le poste 1 comporte un capteur de position 8. Au lieu d'incruster des petites images dans une image de fond, ou en plus de cette dernière, on peut juxtaposer des images provenant de caméras dirigées vers des régions adjacentes de l'espace environnant l'engin, afin de constituer une image panoramique (à très grand champ optique). La sortie de l'ensemble 20 est reliée à un émetteur 21 muni d'une antenne 22 et avantageusement relié à un ou plusieurs microphones 23 captant l'ambiance sonore à l'intérieur et/ou à l'extérieur de l'engin, et, le cas échéant, les bruits produits par des appareils particuliers de l'engin (par exemple pour en surveiller auditivement la bonne marche).

L'émetteur 21 est également avantageusement relié à un dispositif de localisation 24 de type GPS. Bien entendu, les caractéristiques des récepteurs 11 et 17 correspondent à celles des émetteurs 21 et 4 respectivement. Dans le cas d'une liaison par fil, le récepteur 17 et l'émetteur 21 sont remplacés par des terminaux de câbles appropriés.

De façon avantageuse, les caméras 15, l'ensemble 20 et les dispositifs électroniques au poste 2 sont "durcis" de façon connue en soi vis-à-vis des vibrations dudit engin, si, bien entendu, des vibrations peuvent se produire dans cet engin. Par exemple dans le cas d'engins de travaux publics, le durcissement doit permettre aux équipements ainsi protégés de supporter des vibrations allant jusqu'à 10 G.

## Revendications

1. Procédé de vidéo-commande à distance d'un engin, en particulier d'un véhicule, permettant de visualiser en temps réel l'environnement de cet engin, mettant en oeuvre plusieurs caméras disposées dans l'engin et un poste de commande distant, la liaison entre ce poste de commande et l'engin se faisant par fil ou par ondes radio, caractérisé par le fait qu'il consiste à mixer, dans l'engin même, les signaux vidéo issus des différentes caméras, à transmettre au poste de commande le signal résultant sur un canal de transmission unique, à visualiser au poste de commande, sur un ou plusieurs dispositifs d'affichage les images ainsi mixées, et à transmettre depuis le poste de commande les différents ordres de télécommande de l'engin et des différentes caméras.

2. Procédé selon la revendication 1, caractérisé par le fait que le mixage consiste à réaliser au moins une incrustation d'une image dans une autre.

3. Procédé selon la revendication 1 ou 2, caractérisé par le fait que le mixage consiste à réaliser une juxtaposition d'au moins deux images pour obtenir une image à grand champ.

4. Procédé selon l'une des revendications précédentes, caractérisé par le fait que les ordres de télécommande des caméras comportent des commandes de leur orientation en site et/ou gisement.

5. Procédé selon l'une des revendications précédentes, caractérisé par le fait que les ordres de télécommande des caméras comportent des commandes de leur distance focale.

6. Dispositif de vidéo-commande à distance d'un engin, en particulier d'un véhicule, permettant de visualiser en temps réel l'environnement de cet engin, comportant dans un centre (1) de télécommande, un émetteur (4) de données de télécommande, un récepteur vidéo et audio (11) et au moins un moniteur vidéo (7A à 7D), et dans l'engin à télécommander un émetteur vidéo et audio (21) et un récepteur (17) de télécommande et plusieurs caméras vidéo (15), caractérisé en ce que l'engin à télécommander comporte un dispositif de mixage vidéo (20).

7. Dispositif selon la revendication 6, caractérisé par le fait que les caméras et les équipements électroniques fragiles disposés à bord de l'engin sont équipés de dispositifs atténuant les vibrations qui pourraient leur être transmises.

8. Dispositif selon l'une des revendications 6 ou 7, caractérisé par le fait qu'au moins une partie des caméras comportent des dispositifs (D, 16) de commande d'orientation et/ou de commande de distance focale, reliés au récepteur de télécommande à bord de l'engin.

9. Dispositif selon l'une des revendications 6 à 8, caractérisé par le fait que l'émetteur à bord de l'engin (21) est relié à au moins un microphone (23).

10. Dispositif selon l'une des revendications 6 à 9, caractérisé par le fait que, l'émetteur à bord de l'engin est relié à un dispositif (24) de localisation du type GPS.

## Patentansprüche

1. Verfahren zur Videofernsteuerung einer Maschine, insbesondere eines Fahrzeugs, das die Visualisierung der Umgebung dieser Maschine in Echtzeit ermöglicht und bei dem mehrere in der Maschine angeordnete Kameras und ein entfernter Steuerstand verwendet werden, wobei die Verbindung zwischen dem Steuerstand und der Maschine über Draht oder Funkwellen hergestellt wird, dadurch gekennzeichnet, daß es darin besteht, in der Maschine selbst die von den verschiedenen Kameras stammenden Videosignale zu mischen, das resultierende Signal auf einem einzigen Übertragungskanal zu dem Steuerstand zu übertragen, in dem Steuerstand die derart gemischten Bilder auf einer oder mehrerer Anzeigeeinrichtungen zu visualisieren und von dem Steuerstand aus die verschiedenen Fernsteuerbefehle für die Maschine und die verschiedenen Kameras zu übertragen.

2. Verfahren nach Anspruch 1, dadurch gekennzeichnet, daß das Mischen darin besteht, wenigstens eine Überlagerung eines Bildes in einem anderen durchzuführen.

3. Verfahren nach Anspruch 1 oder 2, dadurch gekennzeichnet, daß das Mischen darin besteht, wenigstens zwei Bilder nebeneinander anzuordnen, um ein Bild mit großem Feld zu erhalten.

4. Verfahren nach einem der vorhergehenden Ansprüche, dadurch gekennzeichnet, daß die Fernsteuerbefehle für die Kameras Steuerungen ihrer Höhen- und/oder Seitenwinkelorientierung umfassen.

5. Verfahren nach einem der vorhergehenden Ansprüche, dadurch gekennzeichnet, daß die Fernsteuerbefehle für die Kameras Steuerungen ihrer Brennweite umfassen.

6. Vorrichtung zur Videofernsteuerung einer Maschine, insbesondere eines Fahrzeugs, die die Visualisierung der Umgebung dieser Maschine in Echtzeit ermöglicht, und die in einem Fernsteuerzentrum (1) einen Sender (4) für Fernsteuerdaten, einen Video- und Audioempfänger (11) und wenigstens einen Videomonitor (7A bis 7D) und in der fernzusteuernden Maschine einen Video- und Audiosender (21) und einen Fernsteuerempfänger (17) sowie mehrere Videokameras (15) aufweist, dadurch gekennzeichnet, daß die fernzusteuernde Maschine eine Videomischeinrichtung (20) aufweist.

7. Vorrichtung nach Anspruch 6, dadurch gekennzeichnet, daß die empfindlichen elektronischen Anlagen, die an Bord der Maschine angeordnet sind, mit Einrichtungen ausgestattet sind, die die Vibrationen dämpfen, die zu ihnen übertragen werden könnten.

8. Vorrichtung nach einem der Ansprüche 6 oder 7, dadurch gekennzeichnet, daß wenigstens ein Teil der Kameras Einrichtungen (D, 16) zum Steuern der Orientierung und/oder zum Steuern der Brennweite aufweist, die mit dem Fernsteuerempfänger an Bord der Maschine verbunden sind.

9. Vorrichtung nach einem der Ansprüche 6 bis 8, dadurch gekennzeichnet, daß der Sender an Bord der Maschine (21) mit wenigstens einem Mikrophon (23) verbunden ist.

10. Vorrichtung nach einem der Ansprüche 6 bis 9, dadurch gekennzeichnet, daß der Sender an Bord der Maschine mit einer Lokalisierungseinrichtung (24) vom Typ GPS verbunden ist.

## Claims

1. Method for the video-assisted remote control of a machine, especially a vehicle, enabling the real-time viewing of the environment of this machine, making use of several cameras positioned in the machine and a remote control station, the link between this control station and the machine being obtained by wire or by radio waves, characterized in that said method consists of the mixing, in the machine itself, of the video signals coming from the different cameras, the transmission to the control station of the resultant signal on a single transmission channel, the viewing at the control station, on one or more display devices, of the images thus mixed and the transmission, from the control station, of the different remote control commands for the machine and the different cameras.

2. Method according to Claim 1, characterized in that the mixing consist of the performance of at least one overlay of one image on another.

3. Method according to Claim 1 or 2, characterized in that the mixing consists in achieving a juxtaposition of at least two images to obtain a wide-field image.

4. Method according to one of the preceding claims, characterized in that the remote control commands for the cameras include instructions for their orientation in elevation and/or in bearing.

5. Method according to one of the preceding claims, characterized in that the commands for the remote control of the cameras include instructions to control their focal length.

6. Device for the video-assisted remote control of a machine, in particular a vehicle, enabling the real-time viewing of the environment of this machine, said device comprising, in a remote control centre (1), a transmitter (4) of remote control data, a video and audio receiver (11) and at least one video monitor (7A to 7D) and, in the machine to be remote-controlled, a video and audio transmitter (21) and a remote-control receiver (17) and several video cameras (15), characterized in that the machine to be remote-controlled comprises a video mixing device (20).

7. Device according to Claim 6, characterized in that the cameras and fragile electronic instruments on board the machine are fitted out with devices attenuating the vibrations that could be transmitted to them.

8. Device according to one of Claims 6 or 7, characterized in that at least some of the cameras comprise orientation control devices and/or focal length control devices (D, 16) connected to the remote-control receiver on board the machine.

9. Device according to one of Claims 6 to 8, characterized in that the transmitter on board the machine (21) is connected to at least one microphone (23).

10. Device according to one of Claims 6 to 9, characterized in that the transmitter on board the machine is connected to a GPS type locating device (24).
